# EUROPEAN PATENT SPECIFICATION

(11) **EP 0 910 721 B1**
(45) Date of publication and mention of the grant of the patent: **08.11.2000**
(21) Application number: 97929596.1
(22) Date of filing: 08.07.1997
(51) Int. Cl.: E06B 3/54, B32B 17/10, E04D 3/28

(54) **METHOD FOR THE PRODUCTION OF CURVED GLAZING**
VERFAHREN ZUM HERSTELLEN GEBOGENER VERGLASUNG
PROCEDE DE PRODUCTION DE VITRAGE COURBE

(30) Priority: 08.07.1996 NL 1003537
(43) Date of publication of application: 28.04.1999
(73) Proprietor: Holland Railconsult B.V., 3500 GW Utrecht (NL)
(72) Inventor: VAKAR, Lászlo, Imre, NL-3818 JB Amersfoort (NL)
(74) Representative: de Bruijn, Leendert C.
(86) International application number: NL9700399
(87) International publication number: WO9801649

(56) References cited:
- EP-A- 0 072 382
- EP-A- 0 282 468
- FR-A- 2 138 711
- FR-A- 2 676 049
- US-A- 4 969 966

## Description

The invention relates to a method for the production of curved glazing, wherein the starting material used is a composite pane consisting of a sandwich of at least two flat glass panes and a single or multiple plastic layer positioned between each pair of glass panes, which composite pane is brought into engagement with a curved surface and is then bent until the edge sections of the pane engage on the curved surface, and, finally, retaining means are fitted in order to hold the curved composite pane in the curved position.

A method of this type is disclosed in EP-A 0 282 468.

Curved panes fitted in the facade or the roof of a building usually consist of a suitable plastic, such as polycarbonate. This material is easy to bend and has the advantage that it is not able to shatter into pieces, as a result of which injury to passers-by can be avoided. A disadvantage is that the plastic used is a relatively soft material and in the course of time the pane becomes covered with a large number of scratches caused by grains of sand and the like brushing over it. There is a gradual deterioration in clearness and transparency. It is known per se to bend a single glass pane in the cold and to fit it in a curved frame. When fitted in certain locations, such a pane can, in the event of breakage, constitute a risk to persons or objects underneath it. This risk can be counteracted by applying a film to one side, but that side is then once again susceptible to scratching.

EP-A 0 282 468 describes a method for the production of a curved glass panel, wherein a sandwich of two flat glass panes and an interlayer of a transparent plastomer adhesive is brought to a temperature of between 80 °C and 140 °C, sufficient to soften the plastomer adhesive and to permit creep thereof. The sandwich is placed on a cylindrically curved former and by applying forces is curved in accordance with the shape of the former. A curved edging strip is fitted on the curved ends of the sandwich and a straight edging strip is fitted on the straight edges of the sandwich. The edging strips are joined to form a frame, after which the bending forces are removed and the curved glazing is removed from the former. The principle of this known method is thus bending at elevated temperature at which the interlayer is softened. This method is expensive and can be carried out only in a factory or workshop and not on the building site itself.

The aim of the invention is to overcome this disadvantage and to this end the method indicated in the preamble is characterised in that the composite pane is curved at ambient temperature without softening of the plastic layer or layers.

Cold-bending of flat sandwich panes consisting of two glass panes and a plastic film positioned between the glass panes has up to now been regarded as impossible to achieve in practice because there was the preconception that on cold-bending of such panes delamination of the plastic layer would occur as a consequence of the difference in elongation in the surface of the two glass panes at the location of their point of contact with the plastic layer. The merit of the invention is that this preconception has been overcome and that, by means of cold-bending, completely safe, scratch-resistant curved glazing can be fitted for the purposes of, for example, transparent roofs of railway stations. The method according to the invention leads to appreciable savings and to excellent results in practice. Of course, the invention can also be used for glazing in facades, glazing in lift shafts and the like.

The method according to the invention is extremely suitable for carrying out on the building site, said curved surface forming part of a frame and said retaining means forming fixing means for fixing the curved composite pane to the frame.

A not inappreciable advantage of curved glazing is that the latter has acquired greater rigidity and strength as a result of the curvature.

The invention will now be explained in more detail by way of example with reference to the figures.

Figure 1 shows a diagrammatic representation of the method according to the invention.

Figure 2 shows a cross-section through the glazing in the flat state.

Figure 3 shows a side view of curved glazing obtained according to the invention on the roof of, for example, a railway station.

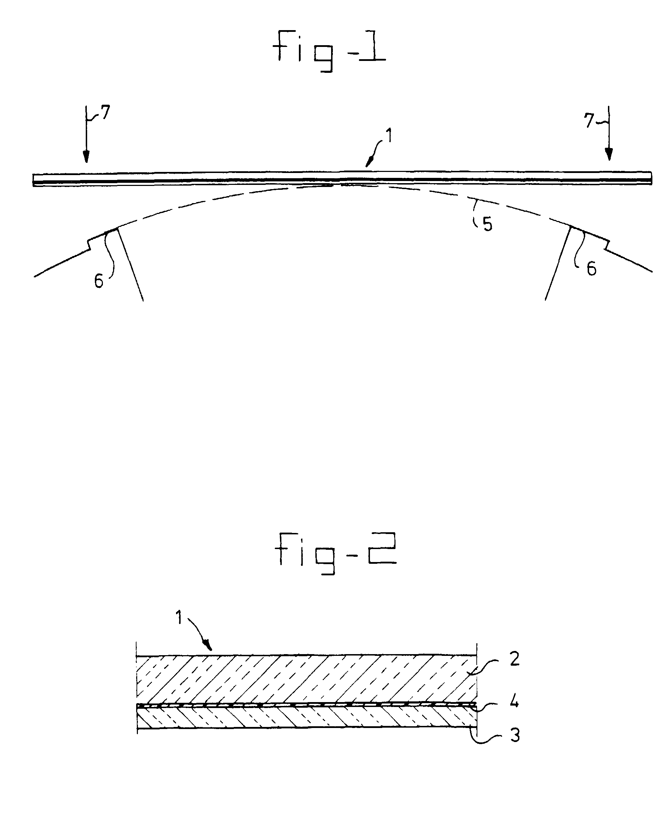

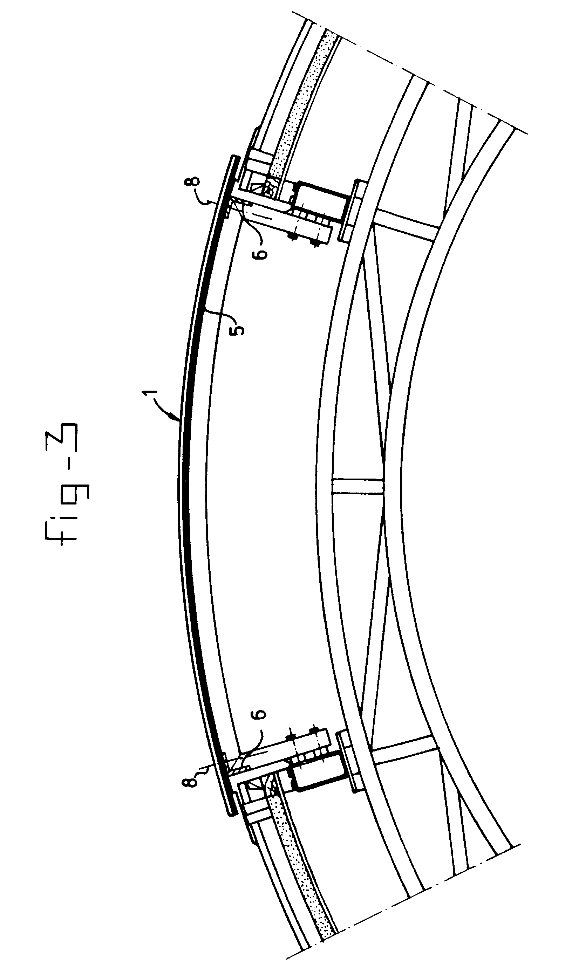

It can be seen from Figures 1 and 2 that a flat composite pane 1, consisting of a sandwich of two glass panes 2 and 3 and a single or multiple plastic layer 4 positioned between said glass panes, is brought into engagement symmetrically with a curved surface 5 of a frame 6 and is then subjected to loading close to the ends (see arrows 7) in the direction of the frame.

The result can be seen in detail in Figure 3. By means of cold-bending the composite pane has, in the curved position, been brought with its peripheral edge into full engagement with the frame 6, the curved pane being held in place with the aid of fixing means, which are indicated diagrammatically by 8 in Figure 3. Said fixing means can consist, inter alia, of bolts which extend through holes in the glazing and the frame and can also consist of robust glazing beads.

For example, the pane 2 has a thickness of 5 mm and the pane 3 a thickness of 3 mm and the thickness of a film made up of two different plastic materials is about 0.75 mm.

Various variants of the invention shown are possible within the scope of the claims. For instance, the sandwich can also comprise more than two glass panes, a plastic layer being present between each pair of glass panes. Glazing consisting of more than two glass panes can in general be curved more easily than glazing of the same thickness consisting of two glass panes.

## Claims

1. Method for the production of curved glazing, wherein the starting material used is a composite pane (1) consisting of a sandwich of at least two flat glass panes (2, 3) and a single or multiple plastic layer (4) positioned between each pair of glass panes, which composite pane is brought into engagement with a curved surface (5) and is then bent until the edge sections of the pane engage on the curved surface (5), and, finally, retaining means (8) are fitted in order to hold the curved composite pane in the curved position, characterised in that the composite pane is curved at ambient temperature without softening of the plastic layer or layers.

2. Method according to Claim 1, characterised in that said curved surface (5) forms part of a frame (6) and said retaining means (8) form fixing means for fixing the curved composite pane to the frame.

3. Method according to Claim 1 or 2, characterised in that the glass panes consist of tempered or toughened glass.

## Patentansprüche

1. Verfahren für die Herstellung einer gebogenen Verglasung, wobei das verwendete Ausgangsmaterial eine Verbundglasscheibe (1) ist, welche aus einem Sandwich aus zumindest zwei ebenen Glasscheiben (2, 3) und einer einzelnen oder multiplen Kunststoffschicht (4) besteht, welche zwischen jedem Paar von Glasscheiben angeordnet ist, wobei die Verbundglasscheibe in Eingriff mit einer gebogenen Oberfläche (5) gebracht wird und dann gebogen wird, bis die Randabschnitte der Glasscheibe auf der gebogenen Oberfläche (5) in Eingriff gelangen, und schließlich werden Rückhalteeinrichtungen (8) befestigt werden, um die gebogene Verbundglasscheibe in der gebogenen Position zu halten, dadurch gekennzeichnet, daß die Verbundglasscheibe bei Umgebungstemperatur gebogen wird ohne die Kunststoffschicht oder Schichten zu erweichen.

2. Verfahren gemäß Anspruch 1, dadurch gekennzeichnet, daß die gebogene Oberfläche (5) einen Teil eines Rahmens (6) bildet, und die Rückhalteeinrichtungen (8) Befestigungseinrichtungen zum Befestigen der gebogenen Verbundglasscheibe an dem Rahmen bilden.

3. Verfahren gemäß Anspruch 1 oder 2, dadurch gekennzeichnet, daß die Glasscheiben aus einem vorgespannten oder verstärkten Glas bestehen.

## Revendications

1. Procédé de production d'un vitrage bombé, dans lequel le matériau de départ utilisé est une vitre composite (1) constituée d'un sandwich d'au moins deux vitres plates en verre (2, 3) et d'une seule, ou de plusieurs, couches en matière plastique (4) placées entre chaque paire de vitres en verre, dans lequel on amène la vitre composite en coopération avec une surface incurvée (5) et on la cintre ensuite jusqu'à ce que les sections de bord de la vitre s'appuient sur la surface incurvée (5), et dans lequel on monte finalement des moyens de maintien (8) pour maintenir la vitre composite bombée dans la position bombée, caractérisé en ce que la vitre composite est cintrée à température ambiante sans ramollissement de la couche, ou des couches, de plastique.

2. Procédé selon la revendication 1, caractérisé en ce que ladite surface incurvée (5) forme une partie d'un bâti (6) et en ce que lesdits moyens de maintien (8) forment des moyens de fixation servant à fixer la vitre composite bombée au bâti.

3. Procédé selon la revendication 1 ou 2, caractérisé en ce que les vitres en verre sont constituées de verre trempé, ou de sécurité.
